# EUROPÄISCHE PATENTSCHRIFT

(11) **EP 1 115 595 B1**
(45) Veröffentlichungstag und Bekanntmachung des Hinweises auf die Patenterteilung: **07.06.2006**
(21) Anmeldenummer: 00952918.1
(22) Anmeldetag: 11.07.2000
(51) Int. Cl.: B60S 1/24

(54) **ANTRIEB EINER WISCHERANLAGE**
DRIVE MECHANISM FOR A WIPER SYSTEM
MECANISME D'ENTRAINEMENT D'UN SYSTEME D'ESSUIE-GLACE

(30) Priorität: 24.07.1999 DE 19934869
(43) Veröffentlichungstag der Anmeldung: 18.07.2001
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE2000/002252
(87) Internationale Veröffentlichungsnummer: WO 2001/007303

(56) Entgegenhaltungen:
- EP-A- 0 424 834
- US-A- 4 512 056
- US-A- 4 672 709
- US-A- 5 920 948

## Beschreibung

### Stand der Technik

Die Erfindung geht von einem Antrieb einer Wischeranlage nach dem Oberbegriff des Anspruchs 1 aus, der von dem Antrieb nach der US-A-5 920 948 ausgeht.

Wischeranlagen mit mehreren Scheibenwischern für Kraftfahrzeuge werden mit deren Wischerlagern direkt oder indirekt über eine Platine an der Fahrzeugkarosserie befestigt. Die Platine bzw. eine Rohrplatine - wenn der Wischerträger auch rohrförmige Hohlprofile enthält -, umfaßt eine Motorplatine, die einen Wischerantrieb mit einem Wischermotor und einem daran angebauten Getriebe trägt. Eine Abtriebswelle des Getriebes ist in einem Getriebedom gelagert und treibt in der Regel über eine Kurbel und Gelenkstangen weitere Kurbeln an, die mit einer Antriebswelle für jeden Scheibenwischer fest verbunden sind.

Ferner ist es möglich, daß die Abtriebswelle des Wischermotors ein Viergelenkhebelgetriebe antreibt. Dieses besitzt einen Antriebshebel, der auf einer Antriebsachse schwenkbar sitzt und über eine Koppelstange gelenkig mit einem Lenkerhebel verbunden ist. Dieser ist auf einer ortsfesten Achse schwenkbar gelagert. An der Koppelstange ist ein Befestigungsteil eines Wischarms einstückig angeformt und bildet mit diesem einen sogenannten Viergelenkwischhebel, an dem über ein Abklappgelenk das Gelenkteil des Wischarm befestigt ist. Der Antriebshebel kann direkt von einer Abtriebswelle des Wischermotors oder über eine Kurbel und Gelenkstangen angetrieben werden. Ferner kann er als Kreuzhebel ausgebildet sein. Die Kinematik des Viergelenkhebelgetriebes bewirkt eine kombinierte Hub-Schwenkbewegung des Scheibenwischers. Dadurch kann der Scheibenwischer besser der eckigen Kontur einer Fahrzeugscheibe folgen. Sind zwei gleichläufige Scheibenwischer vorgesehen, wird in der Regel nur einer über ein Viergelenkhebelgetriebe angetrieben, während der andere über eine Gelenkstange und eine Kurbel mit einem angetriebenen Element verbunden ist.

Um geringe Kräfte an den Gelenkstangen zu erhalten, besitzt die Kurbel eine relativ große Länge. Daraus ergibt sich ein großer Radius der Kurbelbahn, die zusammen mit dem üblicherweise kleinen Verhältnis vom Kurbelradius zur Stangenlänge von ca. 1/4 bis 1/7 ein entsprechend großes Bauvolumen und einen entsprechenden Bewegungsraum für das Wischergestänge erfordert. Darüber hinaus führt es zu einem unharmonischen Bewegungsablauf. Es sind auch Wischerantriebe mit reversierbaren Wischermotoren bekannt, bei denen die Kurbel an der Abtriebswelle des Wischermotors eine annähernd halbkreisförmige Schwenkbewegung ausführt. Dieser Antrieb beansprucht einen deutlich geringeren Bewegungsraum für die Kurbel am Wischermotor.

Bei den bekannten Antrieben bestimmt die Position des Wischermotors die Lage und die Geometrie der Antriebskurve für die Gelenkstangen. Da der Wischermotor und das Hebelgetriebe jedoch nicht beliebig positioniert werden können, weil der Platz im Fahrzeug begrenzt ist und für andere Geräte genutzt wird, ergibt sich oftmals eine ungünstige Kinematik, die einen ungünstigen Geschwindigkeits- und Beschleunigungsverlauf für das Hebelgetriebe zur Folge hat und in der Regel einen großen Bewegungsraum benötigt. Demzufolge entstehen Kompromißlösungen, die sich negativ auf die Qualität und Zuverlässigkeit der Wischeranlage auswirken.

Aus der EP-A-0 781 691 ist ein Wischerantrieb bekannt, der aus einem Wischermotor und einem Hebelgetriebe besteht. Auf der Abtriebswelle des Wischermotors sitzt eine gekröpfte Antriebskurbel. Eine Gelenkstange, die über ein Kugelgelenk an der Antriebskurbel angelenkt ist, ist mit ihrem freien Ende ebenfalls über ein Kugelgelenk an einer als Kurbelplatte ausgebildeten Kurbel angelenkt, die an einer Antriebswelle eines Scheibenwischers befestigt ist. An der Kurbelplatte greift über ein weiteres Kugelgelenk eine zweite Gelenkstange an, die mit ihrem freien Ende an einer Kurbel angelenkt ist, die an einer Antriebswelle für einen zweiten Scheibenwischer befestigt ist. Das aus den Kurbeln und Gelenkstangen bestehende Hebelgetriebe ist sehr aufwendig und beansprucht viel Bewegungsraum.

Aus der US-A-5 920 948 ist eine Scheibenwischeranlage bekannt, bei der ein Wischermotor über eine Kurbel und über eine Gelenkstange eine Kurbel antreibt, die drehfest mit einer Antriebswelle eines Scheibenwischers auf der Fahrerseite eines Kraftfahrzeugs verbunden ist. Auf der Beifahrerseite wird der Scheibenwischer über ein Vielgelenkhebelgetriebe angetrieben, dessen Antriebshebel über eine Gelenkstange gelenkig mit der Kurbel des Wischermotors verbunden ist. Durch das Vielgelenkhebelgetriebe wird dem Scheibenwischer bei seiner Schwenkbewegung eine Hubbewegung überlagert, sodass er tief in die obere Ecke der Fahrzeugscheibe eintauchen kann, wodurch das Wischfeld vergrößert wird. Die Gelenkstange für die Beifahrerseite ist einstückig mit der Gelenkstange für die Fahrerseite verbunden und bildet eine Verlängerung derselben über die Kurbel des Wischermotors hinaus.

### Vorteile der Erfindung

Nach der Erfindung ist die Koppelstange an ihrem von der wischermotorseitigen Kurbel abgewandten Ende über eine zweite Gelenkstange gelenkig mit der wischerseitigen Kurbel des zweiten Scheibenwischers verbunden und ist ebenfalls gelenkig mit einem Ende eines Lenkers verbunden, der mit seinem anderen Ende in einer Lagerstelle an einer Fahrzeugkarosserie bzw. an einer fest mit dieser verbundenen Platine schwenkbar gelagert ist. Das so gebildete Koppelgetriebe ist über die erste Gelenkstange mit dem Antriebshebel des Vielhebelgetriebes verbunden. Das Koppelgetriebe, das insbesondere einen kleinen, kompakten Bewegungsraum beansprucht, wenn ein reversierbarer Wischermotor verwendet wird, bietet viele Möglichkeiten, um die Gelenkstangen anzulenken und anzutreiben. Dadurch kann die Kinematik des Wischerantriebs so beeinflußt werden, daß durch die ausgewählte Anlenkung der Gelenkstangen an das Koppelgetriebe eine ungünstige Position des Wischermotors kompensiert werden kann. Daher kann die Position des Wischermotors freizügig nach den Platzverhältnissen im Fahrzeug gewählt werden, ohne die zuvor geschilderten Nachteile in Kauf nehmen zu müssen.

Die Koppelstange kann ein einfaches Blechteil sein, welches an seinen Enden jeweils einen Gelenkbolzen aufweist, an dem sich der Lenker bzw. die Kurbel über eine Lagerschale anschließt. Dabei können die Gelenkbolzen einseitig an der Koppelstange befestigt sein. Um Biegekräfte an den Anschlußstellen zwischen den Gelenkbolzen und der Koppelstange zu vermeiden, ist es zweckmäßig, daß die Koppelstange zwei Blechteile aufweist, zwischen denen sie mindestens einen Gelenkbolzen an seinen Stirnseiten hält. Durch die beidseitige Befestigung der Gelenkbolzen und die Lagerung der Kurbel bzw. des Lenkers zwischen den Befestigungsstellen sind die Biegekräfte sehr gering.

Wenn die Kurbel, die Koppelstange und der Lenker in einer Ebene liegen, können die Gelenkbolzen zylindrisch ausgeführt werden. Anderenfalls sind statt dessen Kugelgelenke vorzusehen. Sind die Gelenkbolzen an ihren beiden Stirnseiten an der Koppelstange befestigt, besitzt die Koppelstange im Bereich der Gelenke eine beträchtliche Höhe. Es ist daher vorteilhaft, die Koppelstange an ihren Enden gabelförmig zu gestalten, wobei sie in der Gabel den Gelenkbolzen hält. Dadurch kann sie zwischen den Gelenken eine beliebige Höhe annehmen, so daß bei einer flachen Bauweise des Koppelgetriebes der Freigang der Hebel und Anlenkpunkte gewährleistet ist. Eine solche Gestaltüng ist sowohl für Koppelstangen aus Druckguß als auch aus Blechteilen geeignet.

Weist die Koppelstange zwei Blechteile auf, so werden diese zweckmäßigerweise zwischen den Gelenkbolzen örtlich zusammengeheftet. Hierbei kann ein Blechteil zum anderen hin gebogen sein, so daß sich durch die Kröpfung des Blechteils in Längsrichtung der Koppelstange ein Bewegungsfreiraum für weitere Antriebsteile ergibt. Die Koppelstange kann auch quer zur Bewegungsrichtung Kröpfungen aufweisen, die einen Freigang zu anderen Antriebsteilen gewährleisten.

Die Gelenkstangen können an verschiedenen Stellen des Koppelgetriebes angelenkt werden. Hierzu dienen Kugelzapfen, die z.B. an der Kurbel des Wischermotors, am Lenker, an der Koppelstange zwischen den Gelenken oder an den Gelenkbolzen angeordnet sind. Sind die Kugelzapfen an der Kurbel des Wischermotors oder an der Koppelstange oder am Lenker angeordnet, werden sie üblicherweise durch Taumelnieten befestigt. Wenn die Koppelstange zwischen den Gelenkbolzen örtlich zusammengeheftet wird, kann dies auch durch einen Kugelzapfen geschehen, der in diesem Bereich durch Taumelnieten beide Blechteile miteinander verbindet.

Ober das Koppelgetriebe können mehrere, in der Regel zwei, Scheibenwischer angetrieben werden. Es sind dann entsprechend viele Kugelzapfen vorzusehen, die auch als Doppelkugelzapfen ausgebildet sein können.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

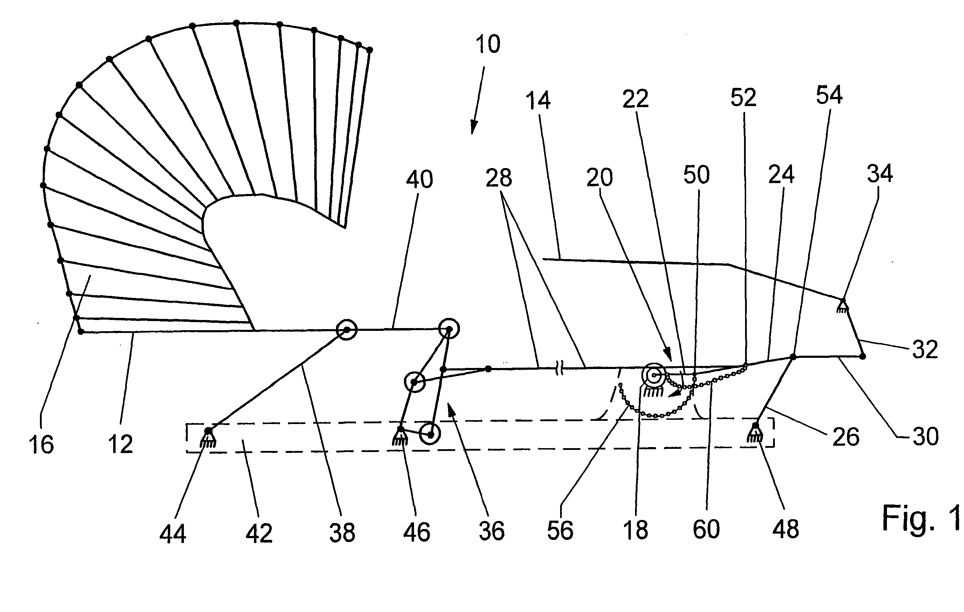

- Fig. 1: eine schematische Darstellung einer Wischeranlage,
- Fig. 2: eine schematische Darstellung eines Wischermotors mit einem Koppelgetriebe und verschiedenen Bewegungskurven,
- Fig. 3: eine perspektivische Darstellung eines erfindungsgemäßen Koppelgetriebes,
- Fig. 4: eine Seitenansicht einer Lagerstelle der Koppelstange im Schnitt,
- Fig. 5-6: Varianten zu Fig. 4,
- Fig. 7: einen Längsschnitt durch eine Koppelstange und
- Fig. 8-10: Varianten zu Fig. 7.

### Beschreibung der Ausführungsbeispiele

Die Wischeranlage 10 besitzt zwei Scheibenwischer 12 und 14. Der Scheibenwischer 14 wird von einem Wischermotor 18 über ein Koppelgetriebe 20 und eine Gelenkstange 30 angetrieben. Diese ist mit einer Kurbel 32 gelenkig verbunden, die eine Antriebswelle 34 antreibt, auf der der Scheibenwischer 14 sitzt. Dieser führt im Betätigungsfall eine einfache Schwenkbewegung um die Antriebswelle 34 aus.

Das Koppelgetriebe 20 umfaßt eine Kurbel 22, eine daran über ein Gelenk 50 angelenkte weitere Koppelstange 24 und einen Lenker 26, der über ein Gelenk 54 an einem Ende mit der Koppelstange 24 verbunden ist und mit seinem anderen Ende in einer Lagerstelle 48 schwenkbar am Fahrzeug bzw. an einer fest mit diesem verbundenen Platine 42 gelagert ist. Die Kurbel 22 wird vom Wischermotor 18 angetrieben, der ein Reversiermotor ist, wobei das Gelenk 50 zwischen der Kurbel 22 und der Koppelstange 24 eine Bewegungskurve 56 beschreibt.

Der Wischer 12 ist an einem Viergelenkwischhebel 40 befestigt, der gelenkig mit einem Lenker 38 und einem Antriebshebel in Form eines Kreuzlenkers 36 verbunden ist. Der Lenker 38 und der Kreuzlenker 36 sind in Lagerstellen 44 bzw. 46 an der Platine 42 schwenkbar gelagert. Aufgrund des Viergelenkwischhebels 40 führt der Scheibenwischer 12 eine Hub-Schwenkbewegung aus und erzeugt ein Wischfeld 16, das gut einer eckigen Kontur einer Windschutzscheibe folgt.

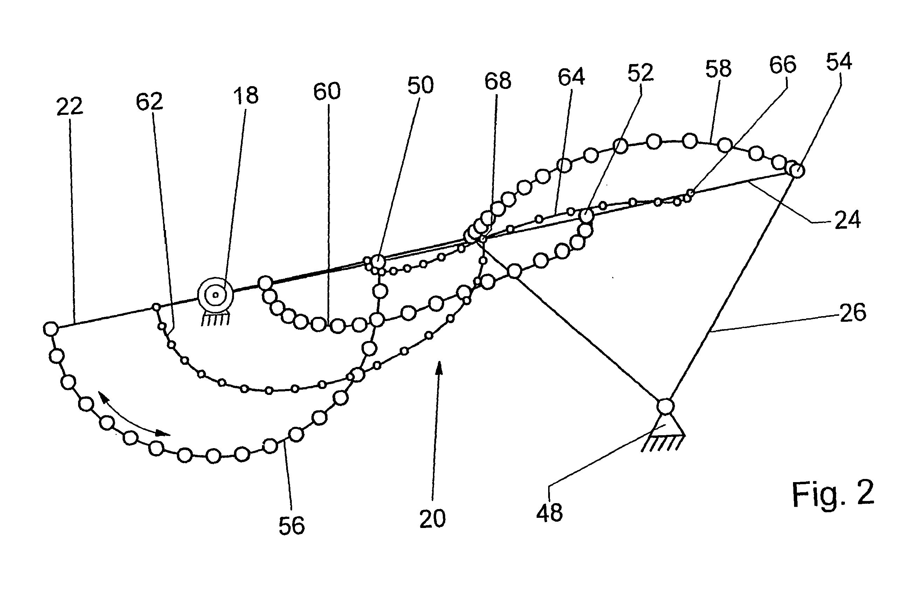

Der Kreuzlenker 36 wird von einer Gelenkstange 28 angetrieben, die in einem Gelenk 52 mit einem Kugelzapfen 80 zwischen den Gelenken 50 und 54 der Koppelstange 24 angelenkt ist. Das Gelenk 52 beschreibt während der Betätigung des Wischermotors 18 eine Bewegungskurve 60, die sehr flach verläuft, so daß die Gelenkstange 28 im wesentlichen eine hin und her gehende Bewegung ausführt und somit nur einen sehr geringen Bewegungsraum beansprucht, der sich mit dem Abstand zwischen dem Wischermotor 18 und dem Antriebshebel 36 kaum ändert. Fig. 2 zeigt in einem vergrößerten Maßstab die Bewegungskurven 56 des Gelenks 50 und des Gelenks 52. Ferner sind alternative Bewegungskurven 62 für einen Anlenkpunkt 68 und eine Bewegungskurve 64 für einen Anlenkpunkt 66 dargestellt. Die Bewegungskurve 58 verdeutlicht die Schwenkbewegung des Lenkers 26 um die Lagerstelle 48 und damit das Ende der Gelenkstange 30 für die Betätigung des Scheibenwischers 14.

Je nach Anordnung der Wischer 12 und 14 sowie der Position des Wischermotors 18 können die Gelenkstangen 28, 30 an geeignete Anlenkpunkte des Koppelgetriebes 20 angelenkt werden.

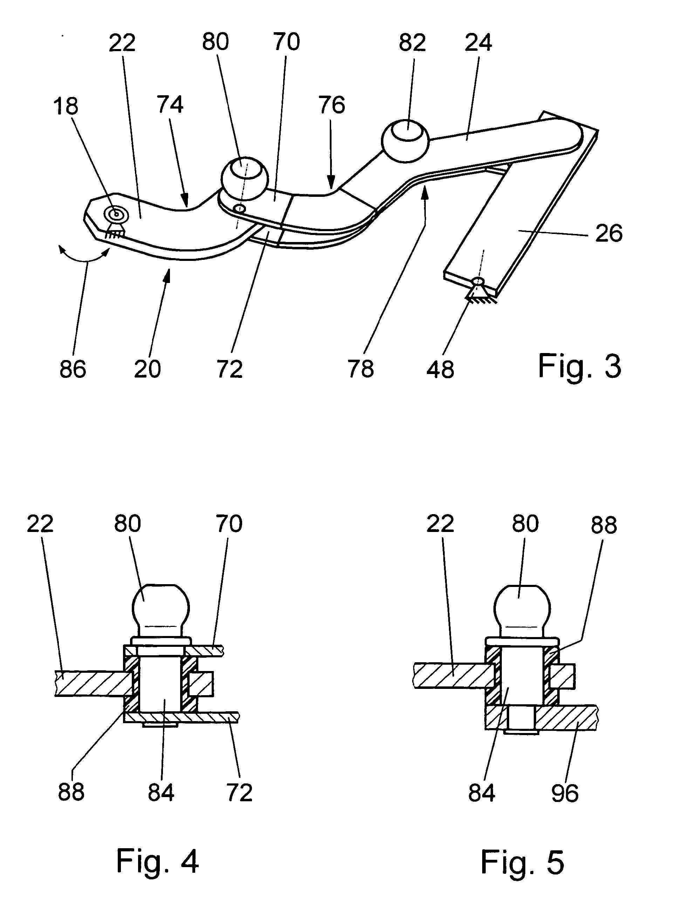

Die Ausführung des Koppelgetriebes 20 nach Fig. 3 hat eine Kurbel 22 mit einer Kröpfung 74 in Bewegungsrichtung. Diese ermöglicht bei einer Schwenkbewegung in Pfeilrichtung 86 eine Kollisionsfreiheit mit einem Kugelzapfen 82 auf der Koppelstange 24. Die Koppelstange 24 besitzt ihrerseits ebenfalls Kröpfungen 76 und 78, die eine Kollisionsfreiheit zu anderen Antriebsteilen gewährleisten.

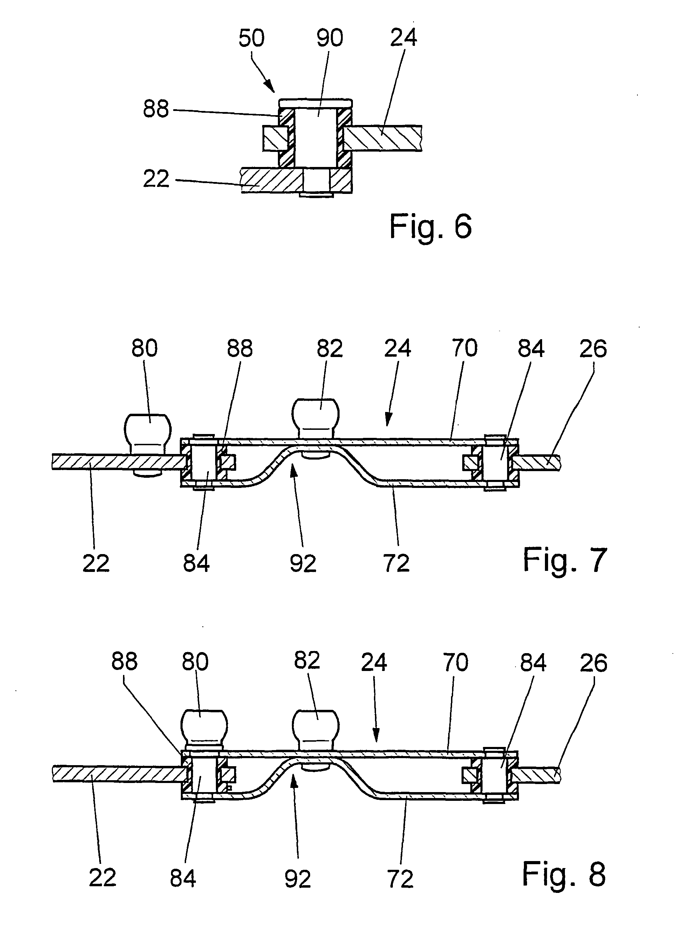

Die Ausführung nach Fig. 4 zeigt einen Gelenkbolzen 84 mit einem angeformten Kugelzapfen 80. Der Gelenkbolzen 84 ist mit einer Koppelstange 24 verbunden, die aus zwei Blechteilen 70 und 72 besteht, indem er mit dem Blechteil 72 vernietet ist und das andere Blechteil 70 zwischen einer Lagerschale 88 und dem Kugelzapfen 80 gehalten wird. Die Lagerschale 88 ist mit der Kurbel 22 fest verbunden, vorzugsweise als Kunststoffteil eingegossen. Die Ausführung nach Fig. 5 unterscheidet sich von der Ausführung nach Fig. 4 dadurch, daß der Gelenkbolzen 84 einseitig mit einer Koppelstange verbunden ist, die aus einem einzigen Blechteil 96 oder einem entsprechenden Druckgußteil besteht. Bei der Ausführung nach Fig. 6 ist ein Gelenkbolzen 90 einseitig mit der Kurbel 22 vernietet. Zwischen der Kurbel 22 und einem Bund des Gelenkbolzens 90 ist die Lagerschale 88 vorgesehen, die mit der Koppelstange 24 fest verbunden ist.

Bei den Ausführungen nach Fig. 7 bis 10 besteht die Koppelstange 24 aus zwei Blechteilen 70 und 72, die an ihren Enden gabelförmig gestaltet sind, indem sie in einem mittleren Bereich zusammengeheftet sind. In den Gabeln an ihren Enden halten die Blechteile 70, 72 Gelenkbolzen 84 mit Lagerschalen 88, an denen die Kurbel 22 bzw. der Lenker 26 befestigt sind.

Bei der Ausführung nach Fig. 7 ist ein Kugelzapfen 80 an der Kurbel 22 befestigt, während ein weiterer Kugelzapfen 82 an der Koppelstange 24 zwischen den Gelenkbolzen 84 angeordnet ist. Die Blechteile 70 und 72 werden durch den Kugelzapfen 82 zusammengeheftet, wobei das Blechteil 72 zum Blechteil 70 hingebogen ist und eine Kröpfung 92 bildet, um eine Kollisionsfreiheit mit anderen Antriebsteilen zu gewährleisten.

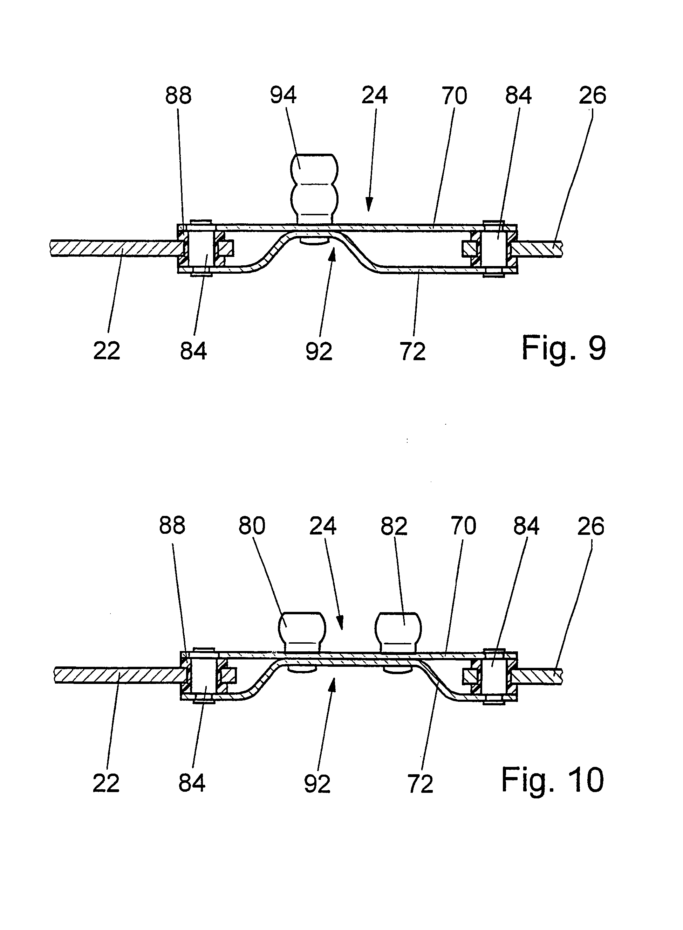

Im Unterschied zur Ausführung nach Fig. 7 ist der Kugelzapfen 80 nach Fig. 8 einstückig mit dem Gelenkbolzen 84 ausgebildet. Fig. 9 zeigt eine Ausführung, bei der ein Doppelkugelzapfen 94 den Kugelzapfen 82 nach den Ausführungen entsprechend Fig. 7 und 8 ersetzt. Schließlich sind die Kugelzapfen 80 und 82 in der Ausführung nach Fig. 10 nebeneinander am Koppelteil 24 zwischen den Gelenkbolzen 84 angeordnet. Durch sie werden die Blechteile 70 und 72 in gleicher Weise miteinander verbunden wie in den Ausführungen nach Fig. 7 bis 9. So ergeben sich zahlreiche Variationsmöglichkeiten für die Lagen und Ausgestaltungen der Anlenkpunkte der Gelenkstangen 28, 30.

### Bezugszeichen

- 10: Wischeranlage
- 12: Scheibenwischer
- 14: Scheibenwischer
- 16: Wischfeld
- 18: Wischermotor
- 20: Koppelgetriebe
- 22: Kurbel
- 24: Koppelstange
- 26: Lenker
- 28: Gelenkstange
- 30: Gelenkstange
- 32: Kurbel
- 34: Antriebswelle
- 36: Antriebshebel
- 38: Lenker
- 40: Viergelenkwischhebel
- 42: Platine
- 44: Lagerstelle
- 46: Lagerstelle
- 48: Lagerstelle
- 50: Gelenk
- 52: Gelenk
- 54: 10 Wischeranlage 54 Gelenk
- 26: 12 Scheibenwischer 56 Bewegungskurve
- 58: 14 Scheibenwischer 58 Bewegungskurve
- 60: 60 Bewegungskurve
- 62: 62 Bewegungskurve
- 64: 64 Bewegungskurve
- 66: Anlenkpunkt
- 68: 68 Anlenkpunkt
- 70: 70 Blechteil
- 72: 72 Blechteil
- 74: 74 Kröpfung
- 76: 76 Kröpfung
- 78: 78 Kröpfung
- 80: 80 Kugelzapfen
- 82: 82 Kugelzapfen
- 84: 84 Gelenkbolzen
- 86: 86 Pfeilrichtung
- 88: 88 Lagerschale
- 90: 90 Gelenkbolzen
- 92: 92 Kröpfung
- 94: 94 Doppelkugelzapfen
- 96: 96 Blechteil

## Patentansprüche

1. Antrieb einer Wischeranlage (10) mit einem Wischermotor (18), der über eine Kurbel (22) und eine erste Gelenkstange (28) einen Antriebshebel (36) eines Hebelgetriebes mit einem Vielgelenkwischhebel (40) eines ersten Scheibenwischers (12) und über eine Koppelstange (24) eine wischerseitige Kurbel (32) eines zweiten Scheibenwischers (14) antreibt, **dadurch gekennzeichnet, dass** die Koppelstange (24) an ihrem von der wischermotorseitigen Kurbel (22) abgewandten Ende über eine zweite Gelenkstange (30) gelenkig mit der wischerseitigen Kurbel (32) verbunden ist und ebenfalls gelenkig mit einem Ende (54) eines Lenkers (26) verbunden ist, der mit seinem anderen Ende in einer Lagerstelle (48) an einer Fahrzeugkarosserie bzw. an einer fest mit dieser verbundenen Platine (42) schwenkbar gelagert ist, wobei das so gebildete Koppelgetriebe (20) über die erste Gelenkstange (28) mit dem Antriebshebel (36) verbunden ist.

2. Antrieb nach Anspruch 1, **dadurch gekennzeichnet, daß** die Koppelstange (24) ein Blechteil (70, 72) ist, welches an seinen Enden jeweils einen Gelenkbolzen (84, 90) aufweist, an dem sich der Lenker (26) bzw. die Kurbel (22) über eine Lagerschale (88) anschließt.

3. Antrieb nach Anspruch 2, **dadurch gekennzeichnet, daß** mindestens ein Gelenkbolzen (84, 90) einseitig an der Koppelstange (24) befestigt ist.

4. Antrieb nach einem der vorhergehenden Ansprüche, **dadurch gekennzeichnet, daß** die Koppelstange (24) zwei Blechteile (70, 72) aufweist, zwischen denen sie mindestens einen Gelenkbolzen (84) an seinen Stirnseiten hält.

5. Antrieb nach einem der vorhergehenden Ansprüche, **dadurch gekennzeichnet; daß** die Koppelstange (24) in gabelförmigen Enden mindestens einen Gelenkbolzen (84) hält.

6. Antrieb nach Anspruch 5, **dadurch gekennzeichnet, daß** die Koppelstange (24) zwei Blechteile (70, 72) aufweist, die zwischen den Gelenkbolzen (84) örtlich zusammengeheftet sind und so die gabelförmigen Enden bilden.

7. Antrieb nach einem der vorhergehenden Ansprüche, **dadurch gekennzeichnet, daß** die Kurbel (22), die Koppelstange (24) und/oder der Lenker (26) in Bewegungsrichtung und/oder quer dazu Kröpfungen (74, 76, 78) aufweist.

8. Antrieb nach einem der vorhergehenden Ansprüche, **dadurch gekennzeichnet, daß** der Wischermotor (18) reversierbar ist.

9. Antrieb nach einem der vorhergehenden Ansprüche, **dadurch gekennzeichnet, daß** ein Ende des Lenkers (26) über eine Lagerstelle (48) an einer Platine (42) gelagert ist.

10. Antrieb nach einem der vorhergehenden Ansprüche, **dadurch gekennzeichnet, daß** die Gelenke (52, 54) als Kugelgelenke (80, 82) ausgebildet sind.

11. Antrieb nach einem der vorhergehenden Ansprüche, **dadurch gekennzeichnet, daß** die Wischeranlage (10) mindestens zwei Scheibenwischer (12, 14) hat, denen jeweils eine Gelenkstange (28, 30) zugeordnet ist, und daß ein Gelenkzapfen (80) für eine Gelenkstange (28, 30) an der Kurbel (22) oder am Lenker (26) und ein weiterer Gelenkzapfen (82) für eine weitere Gelenkstange (28, 30) an der Koppelstange (24) angeordnet sind.

12. Antrieb nach einem der Ansprüche 1 bis 10, **dadurch gekennzeichnet, daß** die Wischeranlage (10) mindestens zwei Scheibenwischer (12, 14) hat, denen jeweils eine Gelenkstange (28, 30) zugeordnet ist, und daß ein Gelenkzapfen (80) für eine Gelenkstange (28) an dem Gelenkbolzen (84) für die Kurbel (22) oder an dem Gelenkbolzen (84) für den Lenker (26) und ein weiterer Gelenkzapfen (82) für eine weitere Gelenkstange (28, 30) an der Koppelstange (24) angeordnet sind.

13. Antrieb nach einem der Ansprüche 1 bis 10, **dadurch gekennzeichnet, daß** die Wischeranlage (10) mindestens zwei Scheibenwischer (12, 14) hat, denen jeweils eine Gelenkstange (28, 30) zugeordnet ist, und daß ein Gelenkzapfen als doppelter Doppelkugelzapfen (94) ausgebildet ist.

14. Antrieb nach einem der Ansprüche 1 bis 10, **dadurch gekennzeichnet, daß** die Wischeranlage (10) mindestens zwei Scheibenwischer (12, 14) hat, denen jeweils eine Gelenkstange (28, 30) zugeordnet ist, und daß zwei Gelenkzapfen (80, 82) für die Gelenkstangen (28, 30) parallel zueinander an der Koppelstange (24) angeordnet sind.

15. Antrieb nach einem der Ansprüche 8 bis 11, **dadurch gekennzeichnet, daß** die Gelenkzapfen (80, 82, 94) bzw. die Gelenkbolzen (84, 90) mit der Kurbel (22), dem Lenker (26) bzw. der Koppelstange (24) vernietet sind.

16. Antrieb nach einem der Ansprüche 8 bis 12, **dadurch gekennzeichnet, daß** die Koppelstange (24) aus zwei Blechen (70, 72) gebildet ist, von denen das den Gelenkzapfen (80, 82, 94) abgewandte Blech (72) im Bereich der Gelenkzapfen (82, 94) zu dem anderen Blech (70) hin gebogen und mit diesem durch die Gelenkzapfen (82, 94) vernietet ist.

17. Antrieb nach einem der vorhergehenden Ansprüche **dadurch gekennzeichnet; daß** der Antriebshebel (36) als Kreuzlenker ausgebildet ist.

## Claims

1. Drive mechanism for a wiper system (10) with a wiper motor (18) which uses a crank (22) and a first articulated rod (28) to drive a driving lever (36) of a lever mechanism with a multi-bar wiper lever (40) of a first window wiper (12) and uses a coupling rod (24) to drive a wiper-side crank (32) of a second window wiper (14), **characterized in that** the coupling rod (24) is connected at its end facing away from the wipermotor-side crank (22) in an articulated manner via a second articulated rod (30) to the wiper-side crank (32) and is connected likewise in an articulated manner to one end (54) of a link (26) which is mounted pivotably at its other end in a bearing point (48) on a vehicle body or on a mounting plate (42) connected fixedly to the latter, the coupling mechanism (20) formed in this manner being connected via the first articulated rod (28) to the driving lever (36).

2. Drive mechanism according to Claim 1, **characterized in that** the coupling rod (24) is a sheet-metal part (70, 72) which has a respective hinge pin (84, 90) at its ends, to which the link (26) or the crank (22) is connected via a bearing shell (88).

3. Drive mechanism according to Claim 2, **characterized in that** at least one hinge pin (84, 90) is fastened on one side to the coupling rod (24).

4. Drive mechanism according to one of the preceding claims, **characterized in that** the coupling rod (24) has two sheet-metal parts (70, 72) between which it holds at least one hinge pin (84) on its end sides.

5. Drive mechanism according to one of the preceding claims, **characterized in that** the coupling rod (24) holds at least one hinge pin (84) in fork-shaped ends.

6. Drive mechanism according to Claim 5, **characterized in that** the coupling rod (24) has two sheet-metal parts (70, 72) which are stuck together locally between the hinge pins (84) and thus form the fork-shaped ends.

7. Drive mechanism according to one of the preceding claims, **characterized in that** the crank (22), the coupling rod (24) and/or the link (26) has bent portions (74, 76, 78) in the direction of movement and/or transversely thereto.

8. Drive mechanism according to one of the preceding claims, **characterized in that** the wiper motor (18) is reversible.

9. Drive mechanism according to one of the preceding claims, **characterized in that** one end of the link (26) is mounted on a mounting plate (42) via a bearing point (48).

10. Drive mechanism according to one of the preceding claims, **characterized in that** the joints (52, 54) are designed as ball-and-socket joints (80, 82).

11. Drive mechanism according to one of the preceding claims, **characterized in that** the wiper system (10) has at least two window wipers (12, 14) which are respectively assigned an articulated rod (28, 30), and **in that** a pivot (80) for an articulated rod (28, 30) is arranged on the crank (22) or on the link (26) and a further pivot (82) for a further articulated rod (28, 30) is arranged on the coupling rod (24).

12. Drive mechanism according to one of Claims 1 to 10, **characterized in that** the wiper system (10) has at least two window wipers (12, 14) which are respectively assigned an articulated rod (28, 30), and **in that** a pivot (80) for an articulated rod (28) is arranged on the hinge pin (84) for the crank (22) or on the hinge pin (84) for the link (26) and a further pivot (82) for a further articulated rod (28, 30) is arranged on the coupling rod (24).

13. Drive mechanism according to one of Claims 1 to 10, **characterized in that** the wiper system (10) has at least two window wipers (12, 14) which are respectively assigned an articulated rod (28, 30), and **in that** a pivot is designed as a dual double-ball pivot (94).

14. Drive mechanism according to one of Claims 1 to 10, **characterized in that** the wiper system (10) has at least two window wipers (12, 14) which are respectively assigned an articulated rod (28, 30), and **in that** two pivots (80, 82) for the articulated rods (28, 30) are arranged parallel to each other on the coupling rod (24).

15. Drive mechanism according to one of Claims 8 to 11, **characterized in that** the pivots (80, 82, 94) and the hinge pins (84, 90) are riveted to the crank (22), the link (26) and the coupling rod (24).

16. Drive mechanism according to one of Claims 8 to 12, **characterized in that** the coupling rod (24) is formed from two metal sheets (70, 72) of which the metal sheet (72) facing away from the pivots (80, 82, 94) is bent in the region of the pivots (82, 94) towards the other metal sheet (70) and is riveted to the latter by the pivots (82, 94).

17. Drive mechanism according to one of the preceding claims, **characterized in that** the driving lever (36) is designed as a cross link.

## Revendications

1. Mécanisme d'entraînement d'une installation d'essuie-glace (10) comportant un moteur d'essuie-glace (18) entraînant par une manivelle (22) et une première tige d'articulation (28), un levier d'entraînement (36) d'une transmission à levier comportant un bras d'essuyage (40) quadrangulaire articulé ayant un premier balai d'essuie-glace (12) et entraînant par l'intermédiaire d'une bielle (24), côté essuie-glace, une manivelle (32) d'un second balai d'essuie-glace (14),
**caractérisé en ce que**
la bielle (24) est articulée à la manivelle (32) côté essuie-glace en son extrémité opposée à celle de la manivelle (22) côté moteur d'essuie-glace par une seconde tige d'articulation (30) et est aussi articulée par une extrémité (54) d'un bras (26) dont l'autre extrémité est montée pivotante dans un palier (48) fixé à la carrosserie du véhicule ou à une platine (42) solidaire de celle-ci,
la transmission par bielle (20) ainsi formée étant reliée par la première tige d'articulation (28) au levier d'entraînement (36).

2. Mécanisme d'entraînement selon la revendication 1,
**caractérisé en ce que**
la bielle (24) est une pièce en tôle (70, 72) dont les extrémités ont chacune un axe d'articulation (84, 90) se poursuivant par le bras (26) ou la manivelle (22) par l'intermédiaire d'une coquille de palier (88).

3. Mécanisme d'entraînement selon la revendication 2,
**caractérisé en ce qu'**
au moins un axe d'articulation (84, 90) est fixé d'un côté à la bielle (24).

4. Mécanisme d'entraînement selon l'une des revendications précédentes,
**caractérisé en ce que**
la bielle (24) comporte deux pièces en tôle (70, 72) entre lesquelles elle tient au moins un axe d'articulation (84) appliqué contre ses faces frontales.

5. Mécanisme d'entraînement selon l'une des revendications précédentes,
**caractérisé en ce que**
la bielle (24) tient par ses extrémités en forme de fourche au moins un axe d'articulation (84).

6. Mécanisme d'entraînement selon la revendication 5,
**caractérisé en ce que**
la bielle (24) comporte deux pièces en tôle (70, 72) entre lesquelles est accroché localement l'axe d'articulation (84) et formant ainsi les extrémités en fourche.

7. Mécanisme d'entraînement selon l'une des revendications précédentes,
**caractérisé en ce que**
la manivelle (22), la bielle (24) et/ou le bras (26) ont des parties cintrées (74, 76, 78) dans la direction de mouvement et/ou transversalement à celle-ci.

8. Mécanisme d'entraînement selon l'une des revendications précédentes,
**caractérisé en ce que**
le moteur d'essuie-glace (18) est réversible.

9. Mécanisme d'entraînement selon l'une des revendications précédentes,
**caractérisé en ce qu'**
une extrémité du bras (26) est reliée à une platine (42) par un palier (48).

10. Mécanisme d'entraînement selon l'une des revendications précédentes,
**caractérisé en ce que**
les articulations (52, 54) sont des articulations à rotule (80, 82).

11. Mécanisme d'entraînement selon l'une des revendications précédentes, **caractérisé en ce que**
l'installation d'essuie-glace (10) comporte au moins deux essuie-glace (12, 14) auxquels est associée chaque fois une tige d'articulation (28, 30) et une tête d'articulation (80) pour une tige d'articulation (28, 30) est installée sur la manivelle (22) ou le bras (26) et une autre rotule d'articulation (82) pour une autre tige d'articulation (28, 30) est prévue sur la bielle (24).

12. Mécanisme d'entraînement selon l'une des revendications 1 à 10,
**caractérisé en ce que**
l'installation d'essuie-glace (10) comporte au moins deux essuie-glace (12, 14) auxquels est associée chaque fois une tige d'articulation (28, 30) et
une rotule d'articulation (80) pour une tige d'articulation (28) est prévue sur l'axe d'articulation (84) de la manivelle (22) ou sur l'axe d'articulation (84) du bras (26) et une autre rotule d'articulation (82) pour une autre tige d'articulation (28, 30) est prévue sur la bielle (24).

13. Mécanisme d'entraînement selon l'une des revendications 1 à 10,
**caractérisé en ce que**
l'installation d'essuie-glace (10) comporte au moins deux essuie-glace (12, 14) auxquels est associée chaque fois une tige d'articulation (28, 30) et une rotule d'articulation sous la forme d'une double rotule d'articulation (94).

14. Mécanisme d'entraînement selon l'une des revendications 1 à 10,
**caractérisé en ce que**
l'installation d'essuie-glace (10) comporte au moins deux essuie-glace (12, 14) auxquels est associée chaque fois une tige d'articulation (28, 30) et deux axes d'articulation (80, 82) pour les tiges d'articulation (28, 30) sont parallèles l'un à l'autre sur la bielle (24).

15. Mécanisme d'entraînement selon l'une des revendications 8 à 11,
**caractérisé en ce que**
les rotules d'articulation (80, 82, 94) ou les axes d'articulation (84, 90) sont rivetés à la manivelle (22), au bras (26) ou à la bielle (24).

16. Mécanisme d'entraînement selon l'une des revendications 8 à 12,
**caractérisé en ce que**
la bielle (24) est formée de deux tôles (70, 72) dont la tôle (72) non tournée vers les rotules d'articulation (80, 82, 94) est recourbée vers l'autre tôle (70) au niveau de la rotule d'articulation (82, 94) et est rivetée à celle-ci à travers la rotule d'articulation (82, 94).

17. Mécanisme d'entraînement selon l'une des revendications précédentes,
**caractérisé en ce que**
le levier d'entraînement (36) est un levier croisé.
